# EUROPÄISCHE PATENTSCHRIFT

(11) **EP 2 376 597 B1**
(45) Veröffentlichungstag und Bekanntmachung des Hinweises auf die Patenterteilung: **05.03.2014**
(21) Anmeldenummer: 09776448.4
(22) Anmeldetag: 18.03.2009
(51) Int. Cl.: C10G 1/00, C10G 1/10, C10J 3/57

(54) **VERFAHREN ZUR AUFBEREITUNG VON ABFÄLLEN**
METHOD FOR TREATING WASTE
PROCÉDÉ POUR LE TRAITEMENT DE DÉCHET

(30) Priorität: 11.12.2008 DE 102008055508
(43) Veröffentlichungstag der Anmeldung: 19.10.2011
(73) Patentinhaber: Von Hertzberg, Patrick, 14469 Potsdam (DE); Müller, Thomas, 01129 Dresden (DE)
(72) Erfinder: MÜLLER, Thomas, 01129 Dresden (DE)
(74) Vertreter: Savic, Bojan
(86) Internationale Anmeldenummer: PCT/EP2009/001991
(87) Internationale Veröffentlichungsnummer: WO 2010/066309

(56) Entgegenhaltungen:
- WO-A1-2008/054190
- WO-A1-2008/102307
- US-A- 3 708 270
- US-A- 3 966 582
- US-A1- 2007 131 585

## Beschreibung

Die Erfindung betrifft ein Verfahren zum Aufbereiten von Abfällen.

Die aus dem Stand der Technik bekannten Möglichkeiten einer stofflichen Nutzung sind bislang begrenzt. Bekannt sind Verfahren, welche versuchen, hydrodynamische Unterschiede zur Komponententrennung zu nutzen (z.B. Sichtung), oder Verfahren, die mittels instrumenteller analytischer Methoden (z.B. spektroskopischer), oder Verfahren, die auf Dichteunterschieden (Schwimm-Sink-Anlagen) oder Verfahren die Löslichkeitsunterschiede bestimmter Kunststoffe in - zumeist - organischen Lösungsmitteln aufsetzen.

Allen diesen Alternativen ist gemein, dass sie entweder zu unbefriedigenden Trennergebnissen führen und/oder wenn diese überhaupt eine stoffliche Nutzung ermöglichen, dann nur eine werkstoffliche Nutzung.

Weiterhin sind Verfahren bekannt, welche mit Hilfe thermochemischer Wandlungen, z.B. Vergasung, Pyrolyse, Reforming etc., Spalt- und/oder Umwandlungsprodukte erzeugen, die energetisch und/oder rohstofflich (z.B. Synthesegas, Monomere) genutzt werden können.

Außerdem sind Verfahren bekannt, die mittels Hydrierung unter drastischen Bedingungen (Prinzip Bergius) zu nutzbaren Produkten führen können.

Die meisten etablierten Müllverwertungsverfahren gehen von einer werkstofflichen Verwertung durch mechanische/physikalische Abfalltrennung aus.

Die dabei zurück gewonnenen, verwertbaren Stoffe, wie Folien, PVC etc., werden als relativ sortenreine Fraktionen oder zu Sekundärgranulaten verarbeitet weiterverkauft. Ein Teil dieser Stoffe wird zu neuen Produkten verarbeitet, die meist ein Down-Cycling darstellen, der kleinste Teil davon hat echte Marktchancen.

Nach der Aussortierung verbleibende Restfraktionen werden meist als Ersatzbrennstoffe aufgearbeitet und liefern mit der anschließenden Verwertung der im Abfall noch enthaltenen chemischen Energie durch Verbrennung Strom und Wärme.

Die Nutzung zur Energieerzeugung steht dabei aber oftmals nicht im Vordergrund, sondern die Abfallbeseitigung.

Letztlich geht bei der Verbrennung immer der in den Abfallkunststoffen enthaltene Herstellungsaufwand verloren, denn dieser ist meist weit höher als der Heizwert.

Aus der DE 197 50 327 C1 ist ein Verfahren zur Herstellung von Synthesegas aus nachwachsenden cellulosehaltigen Roh- oder Abfallstoffen bekannt, das Insbesondere durch seine Konsistenz für eine nachfolgende Verbrennung in Verbrennungskraftmaschinen geeignet ist. In diesem Verfahren sollen auch kontaminierte cellulosehaltige Stoffe, wie z.B. Abfallholz, verwertbar werden. Ein Recycling von Mischabfällen ist hier aber nur bedingt realisierbar.

US 2007/0131585 A1 handelt von einem Verfahren und einer Apparatur für die Extraktion von Kohlenwesserstoffdampf aus Resten. Bei dem als KDV-Verfahren (katalytische drucklose Verölung) Verfahren wird wasserfrei bei Temperaturen von 230 bis 380°C in einem Trägeröl gelöstes organisches Material mit einem als Katalysator bezeichneten Ionentauscher (aus Kalium-, Natrium-, Kalzium- und Magnesium-Aluminium-Silikaten) gearbeitet.

WO 2008/054190 betrifft die Herstellung von Kraftstoffen, die aliphatische Kohlenwasserstoffe enthalten. WO/2008/054190 beschreibt ein Verfahren, das bei einer Temperatur von 300 bis 370 °C und einem Druck zwischen 84 und 175 bar durchgeführt, wodurch eine leichte Fraktion mit Kohlenfasserstoffen mit einem Siedepunkt zwischen 34-100°C und eine Gaskraftstoff-Fraktion erzeugt werden.

Ausgehend hiervon war es Aufgabe der vorliegenden Erfindung, unabhängig vom Anteil der jeweiligen Komponenten, einen hohen Nutzungsgrad der in den Abfällen enthaltenen Stoffe und/oder den aus ihnen freisetzbaren Energien zu schaffen. Insbesondere soll es die Erfindung ermöglichen, Stoffe aus den Abfällen zu gewinnen. Dabei wird sich u.a. an den derzeit nur schwer stofflich nutzbaren Schredderrückständen aus der Auto- und Mischabfallverwertung und anderen kleinteiligen Abfallschüttgütern mit einem hohen, meist schwer bestimmbaren Problemstoffanteil (PVC, Flammschutzmittel etc.) orientiert.

Diese Aufgabe wird durch das Verfahren mit den Merkmalen des Anspruchs 1 gelöst. Die weiteren abhängigen Ansprüche zeigen vorteilhafte Weiterbildungen auf.

Unter Abfällen wird im Rahmen der vorliegenden Anmeldung die Gesamtheit aller Haushaltsabfälle, Produktionsabfälle, Industrieabfälle oder Produktionsrückstände bezeichnet, welcher sich der Besitzer entledigen will oder entledigen muss, wie beispielsweise:
- feste und flüssige Biomassen oder aus ihnen hergestellte Produkte,
- Kunststoffe (Polymere),
- Elastomere,
- anorganische Materialien, wie Mineralien, Metalle und Ihren Verbindungen,
- feste oder flüssige Stör- und/oder Gefahrenstoffe, wie z.B. Schwermetalle und ihre Verbindungen,
- halogensubstituierte organische Verbindungen, wie z.B. Flammschutzmittel,
- Wasser (Feuchte).

Darüber hinaus können die Abfälle auch wenigstens eine der folgenden Komponenten aufweisen: zellulosehaltige Roh- und Abfallstoffe, Fettsäure, Blopolymere, Bitumenmassen, Teermassen, Kombinationen hieraus und dergleichen.

Bei dem erfindungsgemäßen Verfahren werden die Abfälle zunächst mit einer alkalischen Lösung unter Druck und bei einer Temperatur zwischen 140°C und 250°C der alkalischen Lösung behandelt und gleichzeitig oder anschließend werden die anorganischen Bestandteile abgetrennt. Weiterhin werden die organischen Bestandteile des entstandenen Schleppdampfes vom Wasser getrennt und anschließend durch Rektifikation, Extraktion oder Sorption und/oder Überführung durch thermische Verdampfung in Brenn- oder Synthesegas weiter aufbereitet.

Nach dem erfindungsgemäßen Verfahren können die organischen Bestandteile aus dem Schleppdampf durch Überführung in eine Kondensationsapparatur abgetrennt werden und der an organischen Bestanteilen abgereicherte Schleppdampf dem Prozess wieder zugeführt wird.

Erfindungsgemäß werden die aufzubereitenden Abfälle auf eine vorgegebene Partikelgröße welche insbesondere wenigstens eine Kantenlänge von 0.1 bis 10 cm beträgt, zerkleinert.

Der erste Verfahrensschritt beruht darauf, dass organische Bestandteile des Abfalls mittels Solvolyse behandelt werden, so dass sie im Anschluss in mindestens einer flüssigen Phase vorliegen. Im Folgenden wird beispielhaft beschrieben, welche chemischen Reaktionen die einzelnen Komponenten des Abfalls durchlaufen.

Als Solvolyse wird jede chemische Reaktion die zwischen den Abfällen und der alkalischen Lösung erfolgt, bezeichnet.

Gemäß dem erfindungsgemäßen Verfahren werden die Abfällen in einem Reaktor mit einer wässrigen, alkalischen Lösung und einem im Wesentlichen im Wasser nicht löslichen organischen Hilfsmittel zu einer Reaktionsmischung zusammengeführt. Die Reaktionsmischung wird auf einen Temperaturbereich zwischen 140° C bis 250° C erwärmt und unter einen Druck zwischen 3 bar und 12 bar gesetzt, so dass mindestens eine wässrige, eine organische Phase, eine Gasphase und ggf. eine Festphase entstehen. Die Gasphase wird aus dem Reaktor abgeführt und die organischen und wässrigen Bestandteile der Gasphase abgetrennt. Anschließend werden die wässrigen Bestandteile der Gasphase in den Reaktor wieder zurückgeführt.

Die Trennung der wässrigen, alkalischen Phase und organischen Phase kann beispielsweise mittels Extraktion und/oder Dekantierung erfolgen.

Die organische Phase und/oder die wässrige Phase können einer Vakuumdestillation unterzogen werden.

Als vorteilhafte alkalische Lösungen haben sich solche erwiesen, die die anorganischen Carbonate enthalten. Als besonderes vorteilhaft hat sich die Kaliumcarbonatlösung gezeigt.

Die alkalischen Carbontlösungen sind vorzugsweise gesättigt und weisen eine Dichte zwischen 1,5 bis 1,6 g/cm³ auf.

Die organischen Hilfsmittel, sind vorzugsweise Schmieröle, Motorenöle, aliphatische Kohlenwasserstoffe oder dergleichen sind. Die organischen Hilfsmittel sind gegenüber der alkalischen Lösung vorzugsweise inert.

Die Organik, d.h. die organischen Bestandteile, die vorwiegend in dem organischen Hilfsmittel gelöst sind und keinen hinreichenden Dampfdruck aufweisen, um mit dem Schleppdampf ausgetragen zu werden, sind jedoch vorwiegend unpolar und schwimmen auf der alkalischen Lösung auf, da deren Dichte kleiner ist als die der alkalischen Lösung.

Der Austrag dieser aufschwimmenden Phase erfolgt vorzugsweise im BatchVerfahren mit Rührkessel und im Fall des Semi-Batch-Reaktors mit kontinuierlicher Stoffzuführung dann, wenn die gesamte Lösung abgepumpt oder in anderen Behälter umgepumpt, wird. Dabei kann die Lösung über ein 3-Wege Ventil in Abhängigkeit von ihrer Leitfähigkeit in getrennte Behälter gepumpt werden (Ölphase geringe Leitfähigkeit, wässrige Phase hohe Leitfähigkeit).

Wasser wird meist in Form von Feuchte in den Prozess eingetragen. In Abhängigkeit von der Zusammensetzung des Ausgangsmaterials und der Zielprodukte stellt das Wasser eine Bilanzgröße dar. Es laufen Prozesse unter Wasserverbrauch, z.B. Hydrolysen, oder unter Wasserabspaltung ab. Bei sehr trockenem Ausgangsmaterial muss meist eine geringe Menge Wasser zugesetzt werden.

Bei flüssigen Einstoffsystemen steht der Dampfdruck der Flüssigkeit nur in Abhängigkeit zur Temperatur. Dieser Sättigungsdampfdruck wird über die Clausius-Clapeyron-Gleichung beschrieben. Bei Mehrstoffkomponentensystemen sind die Zusammenhänge komplexer. Sind die Komponenten nicht mischbar, so sind im Regelfall die Dampfdrücke der einzelnen Komponenten annähernd additiv (Daltonsches Gesetz). Für die ionischen Komponenten, welche im vorliegenden Fall aus den Ionen des gelösten Kaliumcarbonates und den in der Lösung in ionischer

Form vorliegenden organischen Komponenten gebildet werden, gelten andere Gesetzmäßigkeiten. Hier wirken Komponenten, welche geringere Dampfdrücke als Wasser besitzen, dampfdruckerniedrigend. Diese kolligativen Eigenschaften werden allgemein durch das Raoultsche Gesetz beschrieben, sind jedoch bei so hohen Stoffkonzentrationen, wie im vorliegenden Fall, nur begrenzt anwendbar.

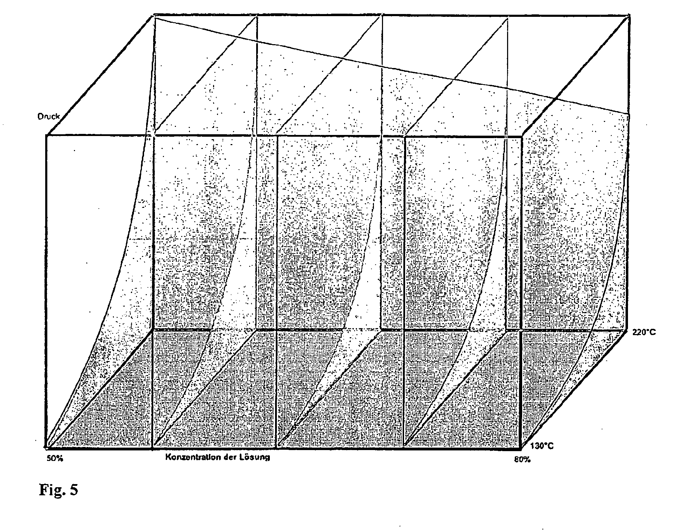

In einer besonders bevorzugten Ausführungsform hat die Salzkonzentration Einfluss auf die Prozessführung wie in Figur 5 gezeigt.

Somit sind die Lösungskonzentration und die Temperatur entscheidende Parameter für den Dampfdruck, d.h. den Systemdruck. Dies gilt natürlich nur unter der Bedingung, dass gasförmige Reaktionsprodukte, wie z.B. CO2 und NH3 aus dem System ausgeschleust werden.

Regelungstechnisch ist es bevorzugt, Temperatur und Druck zu regeln, so dass sich die zugehörige Konzentration einstellt, d.h. überschüssiges Wasser verlässt das System. Nur wenn die wasserverbrauchenden Prozesse, z.B. Hydrolysen, überwiegen, ist eine Zugabe von Wasser notwendig. Durch Vergleich mit der p/T-Kurve ist dies MSR-technisch erkennbar.

Die Reaktionstemperatur beeinflusst neben dem Gleichgewichtsdruck im System hauptsächlich folgende Größen:
- die Kinetik der Solvolyseprozesse,
- die sekundäre Zerfallsreaktionen,
- die Viskosität der Ausgangsstoffe und
- den Partialdruck der organischen Komponenten im Schleppdampf.

Bevorzugt sind 140 bis 250 °C als Reaktionstemperatur.

Die Reaktionszeiten liegen vorzugsweise im Bereich von 0,5 bis 30 Stunden, 2 h bis 20 h und Insbesondere von mehr als 10 h (Chargenbetrieb) und die Gleichgewichtsdrücke vorzugsweise bei 3 bis 12 bar, insbesondere bei 4 bis 10 bar.

Die Solvolyse kann als Batch- oder quasi-kontinuierliches Semi-Batchverfahren im Rührkessel oder Umlaufreaktor oder einer Kombination aus beiden durchgeführt werden. Beide Varianten bieten Vorteile. Die Auswahl ist an Hand des zu erwartenden Input zu treffen. Ist das Vorprodukt sehr kleinteilig und duktil, so bietet die kontinuierliche Variante große Vorteile hinsichtlich der Raum/Zeit-Ausbeute. Für kleine Anlagen mit Fernüberwachung wird sich eher ein Batch-Betrieb als vorteilhaft erweisen.

Während der Solvolyse wird das Abfallgut vorzugsweise gerührt. Das kann durch mechanische Rührer, z.B. Ankerrührer, oder durch das Bewegen der Flüssigkeit im Umlaufreaktor erfolgen. Hier ist ebenso nach dem zu erwartenden Input zu entscheiden.

Der Austrag des Bodenkörpers kann ebenfalls chargenweise oder kontinuierlich erfolgen. Wenn die Gefahr besteht, dass im Abfallgut lange Drähte/Drahtseile vorhanden sind, ist ein chargenweiser Austrag sinnvoll.

Es ist bevorzugt, dass die organischen Bestandteile nach dem Austrag mit aufbereiteter, alkalischer Lösung und/oder Wasser gewaschen werden. Da in den Zwischenräumen der anorganischen Bestandteile häufig durch Adhäsion gebundene oder durch Adsorption fixierte Aufschlusslösung vorzufinden ist, ist das Waschen der anorganischen Bestandteile ein bevorzugter Verfahrensschritt. Das Waschwasser kann dann anschließend der Aufschlusslösung wieder zugeführt werden.

Am Reaktor direkt angeschlossen ist eine Rektifikationskolonne, wobei der Sumpf der Kolonne vorzugsweise vom Reaktor räumlich getrennt ist. Nach der Kolonne (also in Reihenschaltung) wird bevorzugt ein Druckregler angeordnet, der den Systemdruck auf dem Gleichgewichtsdruck konstant hält. So werden bei der Solvolyse frei werdende Gase, die in nur sehr geringen Mengen gebildet werden, aus dem System ausgetragen.

Es ist weiter bevorzugt, dass die organischen Bestandteile durch Extraktionsverfahren, bevorzugt mit Ölen, aus dem System ausgetragen werden. Optional ist es hier auch möglich, dass mittels Hydrolyse oder Elektrolyse die Ausbeute bei der Extraktion bzw. der Destillation gesteigert wird.

Die Aufgabe der Rektifikationskolonne ist es, die entsprechend ihrem Dampfdruck (als Partialdruck) enthaltenen organischen Komponenten, deren Dampfdruck niedriger als der des Wassers ist, aus dem Schleppdampf über den Sumpf abzutrennen und aus dem System zu entfernen. Dadurch wird das thermodynamische System permanent gestört und Organik in den Dampf "nachgeliefert". Damit werden die organischen Bestandteile in einer kaliumfreien Form über den Kolonnensumpf abgeführt.

Der mit den organischen Bestandteilen beladene Wasserdampf wird bevorzugt von unten über den Sumpf in eine Kolonne geleitet, strömt über Füllkörper nach oben und die organischen Bestandteile werden durch abwechselnde Kondensations- und Verdampfungsprozesse im Dampf abgereichert. Anschließend verlässt der Dampf die Kolonne am Kopfende. Die abgetrennten organischen Bestandteile laufen hingegen in den Sumpf.

Durch das Kopfkondensat ist dabei vorzugsweise so viel Kondensationswärme durch Kondensation von Wasser zu entfernen, wie die kondensierenden organischen Komponenten an dieses Wasser als Verdampfungswärme abzugeben vermögen.

Die organischen Bestandteile werden bevorzugt aus dem Solvolyse-Reaktor durch eine Kolonne und/oder mittels Extraktion entfernt.

Ziel dabei ist es, kaliumfreie, möglichst niedrigviskose organische Verbindungen zu erhalten, welche auf Grund stoffspezifischer Eigenschaften, wie z.B. Dampfdruck, Polarität, dielektischer Eigenschaften, Dichte usw. dann aufgetrennt werden können.

Eine Abtrennung über eine Kolonne erfordert dabei einen ausreichenden Dampfdruck, während eine Extraktion ein weitgehend unpolares Verhalten der organischen Bestandteile erfordert.

Ein zu geringer Dampfdruck resultiert insbesondere aus zu großen Molekülen und/oder aus den zu starken intra- und intermolekularen Wechselwirkungen. Starke Bindungskräfte verhindern einen Austritt der Substanzen in die Dampfphase. Besonders stark sind diese Bindungskräfte (die keine echten chemischen Bindungen sind) bei sehr polaren Substanzen, also an funktionellen Gruppen, welche Heteroatome enthalten. Aber nicht nur das Vorhandensein von Heteroatomen alleine, sondern auch noch die entsprechenden Bindungsformen, also der Charakter der chemischen Funktionalität, bestimmt, wie stark die Bindungskräfte sind. Starke Bindungskräfte bewirken ein Absenken des Dampfdrucks, insbesondere dann, wenn die Verbindungen in Ihre Salzform übergehen (z.B. Carboxylate, Alkoxide, Thiolate etc.), also deprotonieren.

Für den Fall zu großer Molekülgröße ist die Substanz bei hinreichend geringer Polarität dann der Extraktion zugänglich, so dass hier insgesamt nur die Verringerung der Polarität erreicht werden muss. Eine geringe Polarität ist Voraussetzung für eine Extraktionsfähigkeit.

Zur Verringerung der Polarität der Substanz sind u.a. zwei Wege möglich, welche nachfolgend näher beschrieben werden. Ziel beider Maßnahmen ist es, eine quantitative Abtrennung der Organik zu erreichen, so dass eine thermische Regeneration der Salzlösung nicht notwendig ist.

Durch partielle Hydrierung können funktionelle Gruppen in eine andere "Oxidationsstufe", welche nicht so polar ist, also z.B. von Carboxyl nach Hydroxyl überführt werden. Die so erreichbaren geringen Säureeigenschaften (KS-Wert) bewirken, dass ein höherer Anteil einer Substanz in einer protonierten Form vorliegt, welche einen Dampfdruck besitzt.

Die partielle Hydrierung, erfolgt insbesondere unter Verwendung von Raney-Nickel als Katalysator, wobei mindestens ein Teils der organischen Bestandteile mit einem zu geringen Dampfdruck erfolgt, durch die Polarität dieser organischen Bestandteile erniedrigt und damit deren Dampfdruck erhöht wird.

Dadurch erhöht sich der Partialdruck der organischen Komponente im Dampfraum, wodurch diese der Rektifikation zugänglich wird.

Weiterhin kann auch eine vollständige Hydrierung erfolgen, so dass die Funktionalität ganz beseitigt wird.

Zur Hydrierung bieten sich unter den vorherrschenden Bedingungen vorzugsweise Raney-Nickel als Katalysator an, dieser kann auch gegebenenfalls in vitro aktiviert werden. In der Alkalilösung ist dieser besonders aktiv. Entstehendes Wasser, H2S, NH3 usw., werden über den Druckregler ausgeschleust und gesondert behandelt.

Speziell die sehr polaren und stark zur Salzbildung neigenden Carboxylgruppen können auf eine sehr elegante Weise beseitigt werden. Durch eine Ein Elektronen-Oxidation auf elektrochemischem Weg wird ein radikalischer Zerfall initiiert, welcher zur Decarboxylierung und zur Addition (im Sonderfall Dimerisierung) der Molekülreste führt. Dieser Mechanismus ist als Kolbe-Elektrolyse oder auch Kolbe-Synthese bekannt.

Die Extraktion kann kontinuierlich im Umlaufverfahren oder chargenweise erfolgen. In einigen Fällen, z.B. dann, wenn das Stoffgemisch große Mengen Bitumen enthält, kann auf den Einsatz von zusätzlichem Extraktionsmittel verzichtet werden, da dann bereits pumpfähige Viskositäten erreicht werden. Ebenfalls kann bei bestimmten Einsatzmaterialien, die frei von z.B. Polyolefinen sind, auch auf den Einsatz von Extraktionsmitteln verzichtet werden.

Die Extraktionsmittel sollten so gewählt werden, dass diese entweder gut vom extrahierten Stoff/Stoffgemisch abtrennbar sind, z.B. durch Vakuumdestillation, oder gemeinsam mit dem extrahierten Stoff weiterverarbeitet werden, z.B. durch Hydrocracken, so dass wieder ausreichend Extraktionsmittel zur Verfügung steht. Es können ebenso preiswerte Extraktionsmittel, wie z.B. Altöl zum Einsatz kommen.

Die aus dem Sumpf der 1. Kolonne entnommenen Substanzen stellen ein mannigfaltiges Gemisch organischer Verbindungen dar. Aus diesem lassen sich Verbindungen abtrennen, welche einen guten Marktwert erzielen. Gleichzeitig stellt dies einen Weg des rohstofflichen Recyclings dar. Ebenfalls interessant ist in diesem Zusammenhang die CO2-Bilanz, da zur Produktion dieser Stoffe aus fossilen Ressourcen, wie Erdöl, neben der rohstofflichen Basis auch sehr viel Prozessenergie verbraucht wird, welche in diesem Falle eingespart wird.

Zur Auftrennung der Gemische sind für gute Ausbeuten bevorzugt Kombinationen aus Rektifikation, Extraktion und Sorption zu nutzen.

Die Anteile, welche nicht trennbar sind und/oder für die kein ausreichender Markt vorhanden ist, können energetisch genutzt werden, oder an Weiterverarbeiter, wie z.B. Raffinerien, verkauft werden. Voraussetzung ist jedoch derzeit, dass die Gemische frei von Heteroatomen sind. Dies kann durch Hydrierung, gegebenenfalls in Verbindung mit Hydrocracken, erreicht werden.

Als Downstrem-Prozess wird hier die Hydrierung bzw. Hydrocracken oder der Verkauf an Raffinerien empfohlen.

Das Sediment wird vorzugsweise eluiert, d.h. gewaschen. Wird das Sediment nicht auf Metalle aufgearbeitet, so ist es bevorzugt, dem Spülwasser Sulfidionen zuzusetzen, um vorhandene Schwermetallsalze in schwerlösliche Sulfide zu überführen, um die Deponiefähigkeit des Substanzgemischs herzustellen.

Eine Aufarbeitung auf Metalle wird aber in vielen Fällen lohnend sein, da insbesondere durch Kunststoffe, wie PVC, sehr viele Schwermetalle (meist in Form von Seifen) eingebracht werden. Diese erzielen i.d.R. hohe Marktpreise.

Für eine Trennung der einzelnen Metalle kommen, neben chemischen Trennungsverfahren, insbesondere elektrochemische Trennungsverfahren in Frage.

Aus den anorganischen Bestandteilen können Metalle mittels Elektroraffination und/oder galvanischer und/oder chemischer und/oder mechanischer Verfahren aufbereitet werden.

Nicht an jedem Standort ist es wirtschaftlich sinnvoll, die stoffliche Ausbeute hinsichtlich der organischen Bestandteile quantitativ zu führen. Die im Sumpf des Primär-Reaktors vorhandenen, in flüssige Form überführten organischen Bestandteile können ebenso über thermische Prozesse genutzt werden.

Bevorzugt erfolgt dies auf dem Weg der thermischen Vergasung, besonders bevorzugt nach modifizierten Schwarzlaugenvergasungsverfahren bei denen die Vergasung unter Druck stattfindet, so dass die Kondensation des Lösungswassers nach der Vergasung genutzt werden kann. Das durch die Vergasung produzierte Gas kann für energetische oder stoffliche Zwecke weiterverarbeitet werden.

Je nach konkreten Ständortbedingungen kann eine rein thermische Weiterverarbeitung oder eine maximale Stoffgewinnung oder eine Kombination aus beidern sinnvoll sein.

Im Nachfolgenden wird beispielsweise die Behandlung und die möglichen Reaktionsprodukte mancher erfindungsgemäß behandelten Abfallstoffe beschrieben.

### Biopolymere

### Cellulose

Cellulose unterliegt in der heißen, wässrigen, alkalischen Lösung einem Moteküllabbau (Peeling-Reaktion). Dies führt zur Bindung von Verbindungen, welche polyfunktionell sind. Insbesondere sind Hydroxyl- und Carboxylgruppen in den Produkten vorherrschend.

### Lignin

Lignin wird im Wesentlichen zu verschiedenen Phenolderivaten abgebaut. Auf Grund der hohen Acidität der Phenole (Mesomeriestabilisierung, induktive Effekte der Arylreste) liegen die Gleichgewichte der Salzbildung sehr weit auf der Seite Salze. Dadurch sind diese Produkte gut in dem polaren Lösungsmittel löslich.

### Fettsäuren

Die biogenen Fettsäuren verseifen zu Carbonsäuresalzen und Propantriol, unter den gegebenen Bedingungen liegen auch die Alkoholkomponenten fast quantitativ in der deprotonierten Form vor. Bei sehr langen Verweilzeiten erfolgt ein allmählicher Abbau der Carbonsäuren durch Decarboxylierung.

### Proteine

Proteine werden zu einer Vielzahl von Verbindungen abgebaut. Dabei entstehen auch viele übel riechende Verbindungen, z.B. Thiole, Amine, Ammoniak.

### Heteroatom-freie Massenkunststoffe/Polymere

### Polyolefine

Polyolefine werden durch die Solvolyse kaum verändert, sie schmelzen auf, wobei insbesondere Polypropylen bei Temperaturen von ca. 200 °C sehr hochviskos ist. Es ist daher sinnvoll, Öl als Lösungsmittel zuzugeben und so die Viskosität zu Gunsten der Pumpfähigkeit abzusenken.

### Bitumenmassen

Bitumen werden im Wesentlichen nur geschmolzen und schwimmen als (bei der Reaktionstemperatur) niedrigviskose Phase auf.

### Teermassen

Teere, welche vorwiegend Aromaten enthalten, werden zum Teil in lösliche Verbindungen überführt, der größte Teil jedoch liegt (bei der Reaktionstemperatur) als niedrigviskose, aufschwimmende Phase vor.

### Polystyrol

Für PS ist ein rein thermisch induzierter Abbau zu Monomeren bzw. Oligomeren erst ab 250 °C üblich. Unter gegebenen Bedingungen kommt es dennoch durch die Einflüsse von in den Molekülverbänd eintretenden organischen Verbindungen und durch die mechanische Bewegung des Rührens zum Abbau.

### Heteroatomhaltige Massenkunststoffe

### Polyethylentherephtalat/Polyester

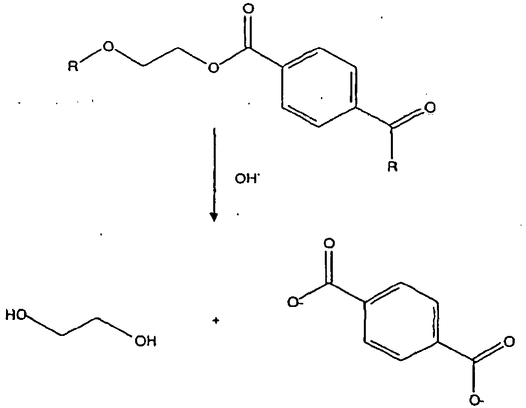

PET stellt chemisch gesehen ein Ester der Terephthalsäure und Ethandiol dar, unter den Bedingungen der Solvolyse wird dieses zu Ethandiol und Terephthalsäure hydrolysiert. Die beiden Produkte liegen entsprechend den thermodynamischen Gleichgewichten hautsächlich in ihrer Salzform vor. In der Wärme ist das Terephthalat gut löslich.

### Polyvinylchlorid

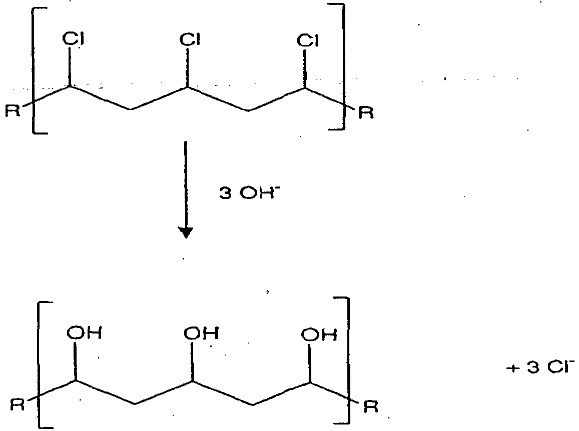

Ziel der Solvolyse beim PVC ist die Substitution des organisch gebundenen Chlors. Organisch gebundenes Chlor birgt bei seiner Verarbeitung unter Erwärmung hohe Risiken, zum einem kann es durch Eliminierung zum Abspalten von HCl kommen (deutlich ab 200 °C), weiche zu neuen (toxischen) Verbindungen durch Substitutionsreaktionen führen kann. Zum anderen kann die kovalente Bindung C-Cl mit annähernd gleichen Elektronegativitäten zum homolytischen, durch Wärme induzierten Bindungsbruch führen. Die daraus resultierenden Radikale führen dann zu unkontrollierbaren Reaktionen, bei denen hochtoxische Produkte entstehen können. Um dem vorzubeugen, wird durch die Solvolyse sichergestellt, dass die u.g. Reaktion abläuft. Die Triebkraft der Reaktion ist die Basizität der Abgangsgruppe (Cl-bessere Abgangsgruppe da geringe Basizität der konjugierten Base)

### Polyurethan

Polyurethane lassen sich durch die Solvolyse nicht wie beispielsweise PET in Monomere spalten, sondern spalten in die entsprechende Alkoholkomponente und Diamine. Aus den Diaminen können mit Phosgen wieder Diisocyanate dargestellt werden.

Im folgenden Beispiel entsteht als Alkoholkomponente 1,4-Butandiol:

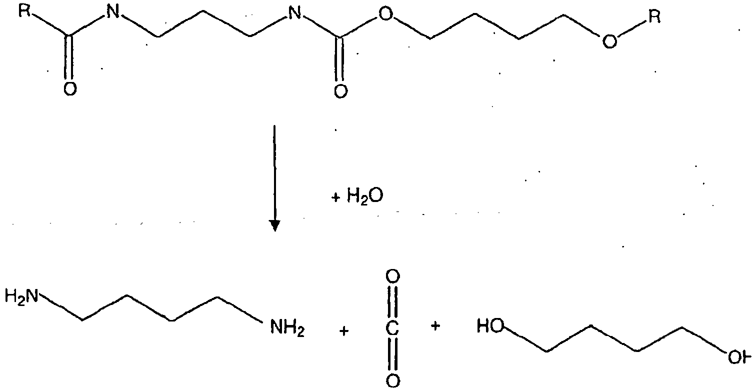

### Polyamid

Die Hydrolyse von Polyamid führt ebenfalls zu Diamin und Alkohol.

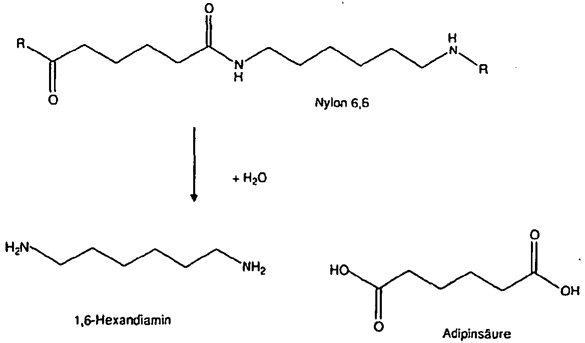

### Füllstoffe aus Kunststoffen

### Anorganische Füllstoffe

Anorganische Füllstoffe dienen z.B. der Erhöhung der Festigkeit von Kunststoffen, beispielsweise glasfaserverstärkte Kunststoffe, der Erhöhung der thermischen Belastbarkeit oder aber auch einfach zum "Strecken" der Kunststoffe.

Zum Einsatz kommen u.a.
- Kieselsäure, auch siliert,
- Quarzmehl,
- Silikate bzw. gemischte Silikate von Alkalimetallen und Edalkalimetallen, Aluminium, Eisen und Zirkon,
- Oxide bzw. Mischoxide von Erdalkalimetallen, Aluminium, Silizium und Zink,
- Hydroxide bzw. Mischhydroxide des Calcium, Magnesium und Aluminium,
- Carbonate bzw. gemischte Carbonate des Calcium, Magnesium und Aluminium,
- Sulfate bzw. gemischte Sulfate des Calcium und Barium,
- Calciumsulfoaluminat,
- Aluminiumpulver und Aluminumbronze,
- Graphit,
- Glasfasern,
- Mikroglaskugeln,
- Dialuminium-hexamagnesium-carbonat-hexadecahydroxid-tetrahydrat,
- Magnesium-Natrium-Fluorid-Silikat,
- Schwermetalle in Form von Seifen.

Diese Stoffe sammeln sich z.T. in leicht veränderter Form im Sediment an, nachdem sie aus der Kunststoffmatrix herausgelöst sind.

Bei einzelnen Kunststoffen kann der Anteil der Füllstoffe über 50 % betragen.

### Weitere Begleitstoffe von Kunststoffen

### Flammschutzmittel

Die wichtigsten Vertreter sind polybromierte Diphenylether (PentaBDE, OctaBDE, DecaBDE), TBBPA und HBCD. Bis in die 70er Jahre wurden außerdem polybromierte Biphenyle (PBB) als Flammschutzmittel verwendet. Zu den chlorierten Flammschutzmitteln zählen z.B. Chlorparaffine und Mirex. Mit Ausnahme von TBBPA werden diese Substanzen nur als additive Flammschutzmittel eingesetzt. Haupteinsatzbereiche sind Kunststoffe in elektrischen und elektronischen Geräten, z.B. Fernseher, Computer, in Textilien, z.B. Polstermöbel, Matratzen, Vorhänge, Sonneristoren, Teppiche, in der Automobilindustrie, z.B. Kunststoffbestandteile und Polsterüberzüge und im Bau, z.B. Isolationsmaterialien und Montageschäume. Vor allem bei Bränden stellen halogenierte Flammschutzmittel eine große Gefahr dar. Unter der Hitzeeinwirkung wirken sie zwar brandhemmend, indem die bei der Pyrolyse gebildeten Halogen-Radikale die Reaktion mit Sauerstoff hemmen. Allerdings entstehen auch hohe Konzentration an polybromierten (PBDD und PBDF) oder polychlorierten Dibenzodioxinen und Dibenzofuranen (PCDD und PCDF). Diese sind auch unter dem Überbegriff "Dioxine" für ihre hohe Toxizität bekannt ("Seveso-Gift").

TBBPA stellt einen Spezialfall der bromierten Flammschutzmittel dar. Es wird hauptsächlich als reaktives Flammschutzmittel eingesetzt, d.h. es wird chemisch in die Polymermatrix, z.B. in Epoxidharze von Leiterplatten, eingebunden und stellt einen festen Bestandteil des Kunststoffes dar. Weitere reaktive bromierte Flammschutzmittel sind z.B. Brom- und Dibromstyrol, sowie Tribromphenol. Ins Polymer eingebunden, sind die Emissionen dieser Flammschutzmittels sehr gering, und stellen meistens keine Gefahr dar. Die Dioxinbildung ist dennoch nicht grundsätzlich geringer. Im geringeren Maß wird TBBPA jedoch auch als additives Flammschutzmittel eingesetzt.

Alle oben genannten bromierten Flammschutzmittel haben eine ausführliche Risikobewertung im Rahmen der EU Altstoffverordnung 793/93/EWG durchlaufen oder sind in der Endphase dieser Risikobewertung. Als Resultat wurden PentaBDE und OctaBDE verboten, da sie sich in der Umwelt anreichern, persistent und toxisch sind, jedoch werden diese Stoffe in den Abfällen noch viele Jahre enthalten sein. Es wurde kein Risiko für Mensch und Umwelt für DecaBDE gefunden, auch für TBBPA wurde kein Risiko für die Gesundheit gefunden. Bei DecaBDE sind in letzter Zeit wieder Diskussionen aufgekommen, da neue Untersuchungen gezeigt haben, dass die Substanz unter Einfluss von UV-Strahlung debromiert werden kann und somit auch die kürzlich verbotenen OctaBDE und PentaBDE gebildet werden können.

Die Gefahrenpotentiale von Flammschutzmitteln, wie polybromierten Diphenylethern (PBDE) und polybromierten Biphenylen (PBB) in Bezug auf deren Bildung von PBDD/F haben zu einem Verbot durch die EU geführt (WEEE, RoHS, ElektroG). Eine Ausnahme bildet DecaBDE, das von diesem Verbot ausdrücklich ausgenommen ist. Durch die Solvolyse werden große Anteile dieser halogenierten, organischen Verbindungen nach ähnlichen Mechanismen wie beim PVC beschrieben verändert, so dass sich das Gefahrenpotential bei thermischen Zerfallsreaktionen wesentlich verringert.

### Anorganische Begleitfrachten

### Anorganische Flammhemmer

### Organophosphor-Flammschutzmittel:

Bei dieser Verbindungsklasse werden typischerweise aromatische und aliphatische Ester der Phosphorsäure eingesetzt, wie beispielsweise:
- TCEP (Tris(chlorethyl)phosphat),
- TCPP (Tris(chlorpropyl)phosphat),
- TDCPP (Tris(dichlorisopropyl)phosphat),
- TPP (Triphenylphosphat),
- TEHP (Tris-(2-ethylhexyl)phosphat),
- TKP (Trikresylphosphat),
- ITP ("Isopropyliertes Triphenylphosphat"), Mono-, Bis- und Tris(isopropylphenyl)phosphate unterschiedlichen Isopropylierungsgrades,
- RDP (Resorcinol-bis(diphenylphosphat)),
- BDP (Bisphenol-A-bis(diphenylphosphat)).

Diese Flammschutzmittel kommen beispielsweise bei weichen und harten PUR-Schäumen in Polstermöbeln, Fahrzeugsitzen oder Baumaterialien zum Einsatz. In letzter Zeit werden BDP und RDP jedoch zunehmend als Ersatzstoffe für OctaBDE in Elektrogeräte-Kunststoffen eingesetzt.

Anorganische Flammschutzmittel sind beispielsweise:
- Aluminiumhydroxid (Al(OH)3), das weltweit am meisten eingesetzte Flammschutzmittel (auch ATH für "Aluminiumtrihydrat" genannt). Es wirkt, durch Abspaltung von Wasser, kühlend und gasverdünnend, muss aber in großen Anteilen (bis zu 60 %) zugemischt werden.
- Magnesiumhydroxid (Mg(OH)2, MDH, "Magnesiumdihydrat") ist ein mineralisches Flammschutzmittel mit höherer Temperaturbeständigkeit als ATH, aber mit gleicher Wirkungsweise.
- Ammoniumsulfat ((NH4)2SO4) und -phosphat ((NH4)3PO4) verdünnen das Gas in der Flamme durch Abspaltung von Ammoniak (NH3), welches zu Wasser und unterschiedlichen Stickoxiden verbrennt und der Flamme dadurch den Sauerstoff entzieht. Gleichzeitig bewirken sie die Bildung einer Schutzschicht durch die entstehende Schwefel- (H2SO4) bzw. Phosphorsäure (H3P04), die als eine ihrer Funktionen die Radikalkettenreaktion unterbrechen können. Die Säuren sind außerdem nicht brennbar, stark hygroskopisch und besitzen hohe Siedepunkte. Daher kondensieren sie im kühleren Bereich der Flamme und schlagen sich auf dem Material nieder. Phosphorsäure bildet durch Wasserabspaltung zusätzlich Meta- und Polyphosphorsäure, welche noch höhere Siedepunkte besitzen.
- Roter Phosphor bildet eine Schicht aus Phosphor- und Polyphosphorsäuren auf der Oberfläche und lässt diese aufquellen (Intumeszenz). Diese Schicht wirkt isolierend und schützt das Material vor Sauerstoffzutritt. Die hier gebildeten Phosphate haben die gleichen Eigenschaften wie die aus dem Ammoniumphosphat stammenden.
- Antimontrioxid (Sb2O3) wirkt nur als Synergist in Kombination mit halogenierten Flammschutzmitteln. Nachteilig ist seine katalytische Wirkung bei der Dioxin-Entstehung im Brandfall.
- Antimonpentoxid (Sb2O5) wirkt, ähnlich wie Sb2O3, als Synergist.
- Zinkborate (siehe Borate) wirken unter anderem durch Wasserabgabe des Borates kühlend und gasverdünnend. Zinkverbindungen können aber auch synergetisch wirken und teilweise das gefährlichere Antimontrioxid ersetzen.
- Gelöschter Kalk (Ca(OH)2) wurde während des 2. Weltkriegs als Flammschutzmittel für das Holz der Dachstühle verwendet. Es bindet zunächst unter Wasserabspaltung Kohlendioxid aus der Luft und geht in Calciumcarbonat (CaCO3) über. Als Schutzanstrich erschwert es den Zutritt von Sauerstoff.

Die anorganischen Flammhemmer werden in zum Teil etwas veränderter chemischer Form (z.B. als Calziumphosphat) nach Auflösung der Kunststoffmatrix freigesetzt und setzten sich ab (sedimentieren).

### Metalle

Metalle in Oxidationsstufe 0 (gegebenenfalls mit oxidierter Oberfläche) stammen im Wesentlichen aus Bauteilen technischer Geräte, z.B. in Form von Draht, Gehäuseteilen, Schrauben, Metallfolien usw.

Metalle, welche sich weitestgehend edel gegenüber der Lösung verhalten, wie Eisen, Kupfer, Nickel usw., sedimentieren. Zuvor werden sie von eventuellen Verbundwerkstoffen, von Kabelisolierungen, aus eingegossenen Werkstoffen usw. befreit, indem der umgebende Kunststoff oder das umgebende Biopolymer (In Holz eingeschlagener Nagel) u.ä. in eine flüssige Form gebracht wurden.

Metalle, die sich gegenüber der Lösung unedel verhalten, werden chemisch verändert.

Aluminium geht unter Wasserstoffentwicklung in eine Aluminat-Form über. Aus dieser entstehen nach Alterung sedimentierende Verbindungen, z.B. Oxyhydrate.

Zink, Zinn, Arsen etc. gehen zunächst auch in lösliche Verbindungen über, aus denen dann die entsprechenden Sulfide gefällt werden können.

Anhand der nachfolgenden Figuren soll der erfindungsgemäße Gegenstand näher erläutert werden, ohne diesen auf die hier gezeigten speziellen Ausführungsformen einschränken zu wollen.

Dabei zeigen
Fig. 1: eine schematische Darstellung einer Anlage zum Durchführen des erfindungsgemäßen Verfahrens;

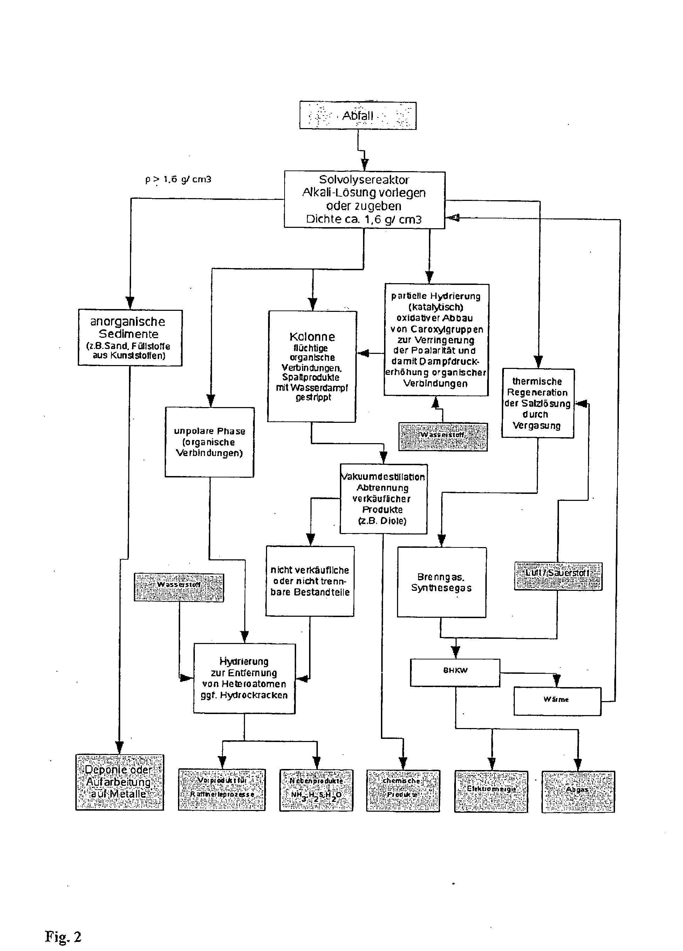

Fig. 2: Fließdiagramm für das erfindungsgemäße Verfahren;
Fig. 3: ein Sankey-Diagramm für das erfindungsgemäße Verfahren;

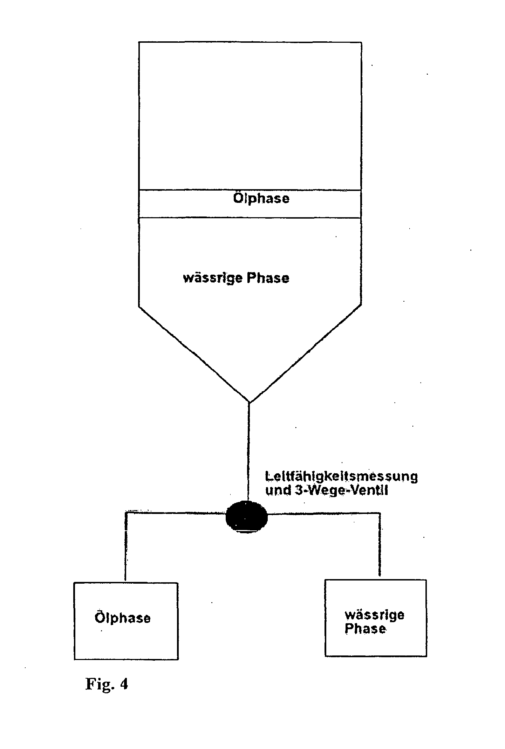

Fig. 4: ein Verfahrensschema zur Trennung der wässrigen und der organischen Phase aus dem Reaktor;
Fig. 5: ein Diagramm zu Druck, Temperatur und Lösungsmittelkonzentration.

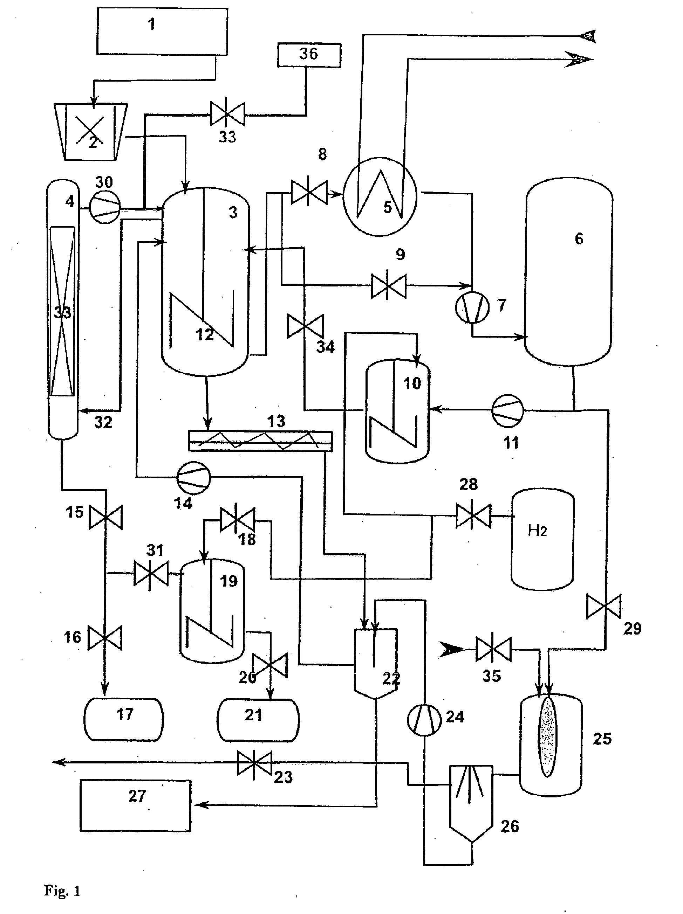

So zeigt Figur 1 eine schematische Darstellung einer Anlage zum Durchführen des erfindungsgemäßen Verfahrens, wobei das zu verarbeitende Gut aus dem Transportbehälter 1 (wahlweise nach Zwischenlagerung) nach einer optionalen Nachzerkleinerung 2 in den Reaktor 3 zugegeben wird.

Dabei kann die Zuführung quasi kontinuierlich (Variante 1 -> Semi-Batch) (z.B. durch eine Stopfschnecke oder Kolbenpresse) erfolgen, wobei die Aufschlusslösung vorgelegt ist, oder der Behälterdeckel des Reaktors wird geöffnet (Variante 2-> Chargenbetrieb).

Bei letzterem Vorgehen muss die Aufschlusslösung zuvor in den Vorratsbehälter 6 gepumpt worden sein, die Ventile 8, 9.und 34 müssen dabei geschlossen sein. Vor dem Öffnen des Deckels ist der Behälter zu entspannen und ggf. Geruchstoffe, toxische Gase und brennbare Dämpfe durch Wasserdampf oder Belüften aus dem Behälter zu verdrängen.

Im Falle des Chargenbetriebes wird nach dem Befüllen und ggf. Inertisierung nun die Alkali-Lösung wieder eingegeben.

Der Reaktor kann mit einem mechanischen Rührwerk, -bevorzugt mit einem Ankerrührer-, versehen werden. Es ist aber auch möglich den Reaktor nur als Umlaufreaktor zu führen, allerdings muss dann durch den Eintritt der Lösung in den Behälter (vorzugsweise tangential) eine ausreichende Bewegung der Reaktanten sichergestellt sein. Im o.g. Schema ist der Reaktor als Rührkessel und als Umlaufreaktor ausgeführt. Die Zuführung von Wärme in den Prozess erfolgt bevorzugt durch einen Wärmetauscher 5 innerhalb des Umlaufs der von Behälter 3 über Behälter 6 → 10 -> wieder in Behälter 3 führt.

Wahlweise kann der Reaktor auch als Doppelmantelbehälter ausgeführt werden und mittels Dampf, Thermoöl oder anderer geeigneter Formen des Wärmeeintrags beheizt werden.

Nach der Zersetzung oder dem Schmelzen der organischen Bestandteile werden die formschlüssig verbundenen (z.B. Isolierte Kabel) oder in einer organischen Matrix gebundenen (z.B. Kunststoff- Compounds) anorganischen Substanzen herausgelöst und sedimentieren auf Grund ihrer höheren Dichte als die Aufschlusslösung.

Diese Sedimente werden über eine Austragvorrichtung 13 kontinuierlich entfernt, oder im Chargenbetrieb nach Öffnen des Reaktors ausgetragen. Nach dem Austrag werden die Sedimente, denen noch mit Organik beladene Aufschlusslösung anhaftet mittels frisch regenerierter Aufschlusslösung ausgewaschen 22. Anschließend wird das Sediment mit Wasser gewaschen und über Deponie entsorgt oder zur Metallgewinnung aufgearbeitet (z.B. für Elektroraffination).

Eine Schlüsselrolle im Prozess nimmt die Kolonne 4 ein. Ihre Aufgabe ist es, den im Wasserdampf enthaltenen Anteil organischer Komponenten, -deren Dampfdruck geringer als der des Wassers ist- aus dem Schleppdampf zu separieren. Dabei ist ein Zwangsumlauf notwendig. Die Kolonne muss als Füllkörperkolonne 33 ausgeführt werden.

Der von Organik abgereicherte Schleppdampf wird stets wieder in den Reaktor 3 geleitet, so dass dieser sich erneut mit Organik beladen kann.

Die im Schleppdampf enthaltenen Gase und Dämpfe von Flüssigkeiten mit höheren Dampfdrücken als Wasser würden zu einer kontinuierlichen Druckerhöhung führen, daher werden diese über ein Druckregelventil in eine Kondensationsapparatur 31 geführt. Dabei wird zwangsläufig auch ein Teil Wasserdampf mit ausgetragen. Sofern das System nicht auf Grund der Feuchte des Ausgangsmaterials, oder durch Spaltreaktionen unter Wasserabgabe, ohnehin einen Wasserüberschuss aufweist, sollte das kondensierte Wasser in den Reaktor zurückgespeist werden. Die ausgetragenen Gase müssen von störenden Gasen befreit werden und können dann noch als Brenngase genutzt oder einfach abgefackelt werden.

Die im Sumpf der Kolonne 4 aufgefangenen organischen Flüssigkeiten können destillativ weiter aufgetrennt werden. Bevorzugt wird diese Destillation im Vakuum durchgeführt, da zum einen die Spreizung der Dampfdruckunterschiede größer ist, zum anderen haben viele Produkte sehr hohe Siedepunkte, so dass zur Destillation Temperaturen notwendig wären, bei denen es zu Zersetzungserscheinungen kommt. Für die Fraktionen, welche sich nicht mit für Produktqualitäten ausreichender Reinheit trennen lassen, oder für die kein ausreichender Markt besteht, ist eine Hydrierung 19 vorzusehen. Bevorzugt sollte diese Hydrierung katalytisch erfolgen. Dadurch werden Produkte erzeugt, die weitestgehend frei von Heteroatomen wie O, S, und N sind. Diese Produkte sind dann z.B. für herkömmliche Raffinerieprozesse zugänglich und besitzen einen Marktwert.

Maßnahmen zur Erhöhung der Ausbeute des Kolonnenprodukts durch Reaktionen im Behälter 10 sind im entsprechenden Abschnitt genauer beschieben.

Hochpolymere organische Substanzen, welche im Reaktor 3 als aufschwimmende Phase vorliegen, können nach dem Abpumpen in Behälter 6 aus diesem entnommen werden. Bevorzugt durch Abpumpen (Steuerung über Leitfähigkeit der Flüssigkeit). Diese Substanzen enthalten kaum Heteroatome und können ebenfalls in Raffinerien weiterverarbeitet werden.

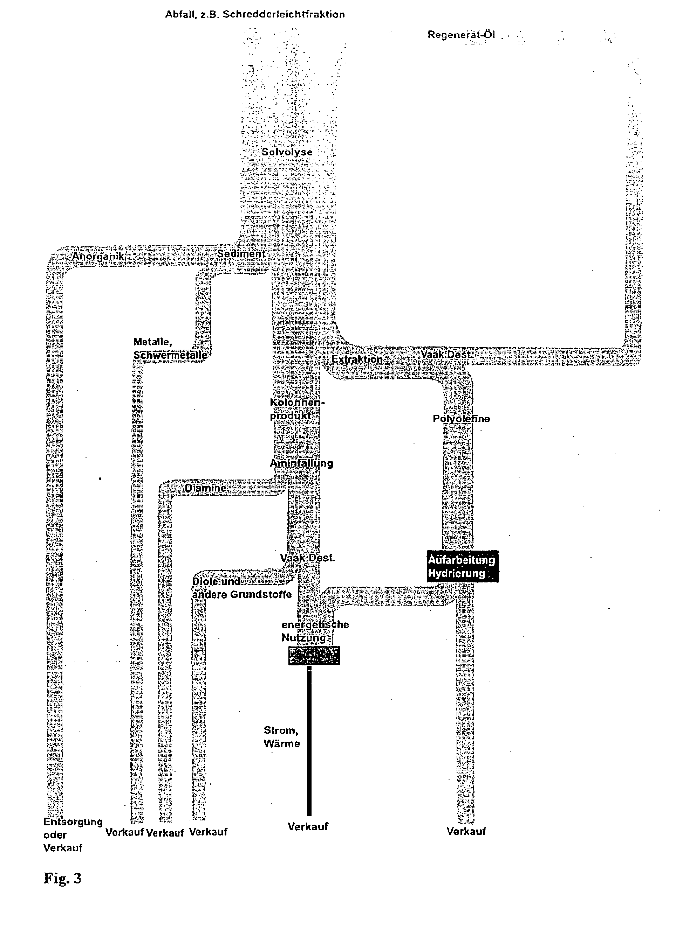

Fig. 3 zeigt ein Verfahrensschema zur Trennung der wässrigen und der organischen Phase aus dem Reaktor. Dabei kann im Falle des Batch-Umlaufteaktors die Abtrennung auch kontinuierlich über einen Schwerkraftabscheider (Ölabscheider), einen Hydrozyclon oder ähnliche technische Einrichtungen erfolgen.

Die Abreicherung der Organik auf Grund der Abtrennung über Dampfdruck oder Extraktion hat ihre Grenzen. Besondes zu Salzbildung neigende, polare Substanzen (insbes. Carboxylate) sind diesen beiden Möglichkeiten wenig zugänglich.

Daher reichert sich die Lösung mit diesen Substanzen an, was bis zum Absenken des PH- Wertes und letztlich zu Erliegen vieler Solvolysereaktionen führen würde.

Daher müssen die organischen Komponenten aus der Lösung entfernt, und die Lösung somit wieder regeneriert werden.

Dazu werden 3 Wege gegangen, die einzeln oder in Kombination durchgeführt werden können.

### - Kolbe -Elektrolyse:

Durch eine ein-Elektronenoxidation einer Carboxylgruppe R-COO- zu R-COO● - Radikalen, welche wiederum unter Decarboxylierung zu CO2 und R● zerfallen, welche wiederum mit R'● die Verbindung R-R' eingehen kann die Polarität durch die Entfernung der Funktionalität stark herabgesetzt werden. Die so erzeugten Substanzen sind nunmehr der Destillation bzw. Extraktion zugänglich, können somit von der Mutterlauge abgetrennt werden.

### - Hydrierung:

Mit Hilfe eines Katalysators (bevorzugt Raney-Nickel) können polare Substanzen hydriert bzw. partiell hydriert werden, um sie ebenfalls der Extraktion bzw. Destillation zugänglich zu machen.

### - thermische Prozesse

Die Lösung kann ebenfalls mit Hilfe thermochemischer Prozesse wie Pyrolyse, Verbrennung, Vergasung, Reforming behandelt werden, um die Alkalien zurückzugewinnen. Nach Verbrennungsprozessen liegt wieder das Karbonat (bevorzugt Kaliumkarbonat) vor und wird wieder als Edukt verwendet.

Figur 5 zeigt ein Diagramm für Druck, Temperatur und Lösungsmittelkonzentartion. Regelungstechnisch hat es sich bewährt, Temperatur und Druck zu regeln, so dass sich die zugehörige Konzentration einstellt. D.h. überschüssiges Wasser verlässt das System. Nur wenn die wasserverbrauchenden Prozesse (z.B. Hydrolysen) überwiegen, ist eine Zugabe von Wasser notwendig. Durch Vergleich mit der p / T-Kurve ist dies MSR- Technisch erkennbar.

Die Reaktionstemperatur beeinflusst neben dem Gleichgewichtsdruck im System hauptsächlich folgende Größen:
- Kinetik der Solvolyseprozesse - besonders träge Reaktionen sind die Dehalogenierung (s.PVC) und der Abbau von Polysacchariden => notwendige Reaktionszeit und damit Raum / Zeit -Ausbeute
- sekundäre Zerfallsreaktionen (z.B. bei Diolen) => Ausbeuteminderung
- Viskosität der Ausgangsstoffe, bei höheren Temperaturen sind die Edukte dünnflüssiger, beweglicher, damit feinere Verteilung (Emulsion) => Raum / ZeitAusbeute
- Partialdruck der organischen Komponenten im Schleppdampf => Kolonnenleistung / Rücklaufverhältnis

Empfohlen werden 180 -220 °C als Reaktionstemperatur. Die Reaktionszeiten liegen dann im Bereich von ca. 10-20 Stunden (Chargenbetrieb) und die Gleichgewichtsdrücke bei 4-10 bar.

### Bezugszeichenliste

1- Voratsbehälter (i.d. R Container)
2- Zerkleinerungseinrichtung (optional)
3- Solvolysereaktor
4- Füllkörperkolonne (bevorzgt Raschig-Ringe)
5-Wärmetauscher (bei Variante Umlaufreaktor), alternativ: direkte Beheizung Solvolysereaktor
6- Vorratsbehälter Lösung (es können mehrere Reaktoren verschaltet sein)
7- Pumpe für Lösung
8- Absperr- / Regelventil Umlauf Lösung (wenn die Lösung nicht über Wärmetausher geleitet werden soll (Regelfunktion)
9- Absperr- / Regelventil für Bypass Wärmetauscher
10- Reaktor für partielle Hydrierung (kann ggf. mit Kolbe-Elektrolyse kombiniert werden [bei Verwendung von Nickel-Elektroden und Wasserstoff als Redoxpartner -> naszierender Wasserstoff an Ni-Öberfläche])
11- Pumpe für Lösung , Zuführung zu Hydrierreaktor
12- Rührwerk Solvolysereaktor
13- (kontinuierliche) Austragvorrichtung Sediment
14- Pumpe für thermisch regenerierte Lösung
15- Absperr- / Regelventil kolonnensumpf
16- Absperr- / Regelventil Produktentnahme
17- Behälter für Kolonnenprodukt
18- Absperr- / Regelventil Wasserstoff Hydrierrektor für Hydrierung Kolonnenprodukt
19- Hydrierreaktor für Kolonnenprodukt
20- Absprerrventil Hdrierreaktor, Produktentnahme
21- Behälter für hydriertes Kofonnenprodukt
22- Schwerkraftabscheider für Sediment nach Vergasung (Z.B. hochgeglühtes Aluminiumoxid, welches vor Vergasung als Aluminat in Lösung war) und vor-Reigung des Sedimentes aus dem Solvolysereaktor (Nachwaschen mit Wasser zur Entfernung von Alkali i.d.R. erforderlich).
23- Absperr- / Regelventil Synthesegas (bei vergasung) bzw. Abgas (bei Verbrennung)
24- Pumpe thermisch regerierte Lösung zu Schwerkraftabscheider
25- Vergaser oder Verbrennungseinrichtung
26- Quenche zur Trennung Salznebel / Gas und Kühlung auf Gleichgewichtsdrucktemperatur.
27- Behälter für Sediment aus 22
28- Absperr- / Regelventil für Wasserstoff
29- Absperr- / Regelventil für Lösung zur thermischen Regeneration
30- Dampfgebläse (möglicht Axial wegen Wasserschlägen durch Sattdampf)
31- Absperr- / Regelventil zum Hydrierbehälter Kolonnnenprodukt
32- Dampfleitung zur Kolonne (Schleppdampf mit Organik)
33- Regelventil Systemdruck (bei Entstehen von Spaltgasen müssen diese aus dem System ausgeschleust werden.
34- Rückspeisung durch Kolbe-Elektrolyse / (partielle) Hydrierung regenerierte Lösung
35- Vergasung/ Verbrennungsluft oder -Sauerstoffzuregelung.
36- Kondensator für bei der Ausschleusung von Gasen mitgerissenem Dampf. daran angeschlossen (nicht eingezeichnet) Kondensatrückführung zu Solvolysereaktor (wenn notwedig, sonst kann an deser Stelle auch Überschusswasser aus dem System ausgeschleust werden, und Abluftbehandlung (Amine, z.B. Ethylamin binden, Ammoniak binden etc.)

## Patentansprüche

1. Verfahren zur Aufbereitung von Abfällen in einem Reaktor (3) mit den Schritten:
- Zusammenführen der aufzubereitenden Abfälle mit einer wässrigen, alkalischen Lösung und einem nicht wasserlöslichen organischen Hilfsmittel zu einer Reaktionsmischung;
- Erwärmen der Reaktionsmischung auf einen Temperaturbereich zwischen 140° C bis 250° C und einem Druck zwischen 3 bar und 12 bar zur Erzeugung von mindestens einer wässrigen Phase, einer organischen Phase, einer Gasphase und ggf. einer Festphase;
- Abführen der Gasphase aus dem Reaktor (3);
- Trennung der organischen und wässrigen Bestandteile der Gasphase, insbesondere durch eine Rektifikationskolonne (4);
- Rückführung der wässrigen Bestandteile der Gasphase in den Reaktor (3).

2. Verfahren gemäß Anspruch 1, **gekennzeichnet durch** die Abtrennung der Festphase von der Reaktionsmischung.

3. Verfahren gemäß Anspruch 2, **gekennzeichnet durch** das Waschen der Festphase nach der Abtrennung.

4. Verfahren gemäß Anspruch 1, **dadurch gekennzeichnet, dass** die Abfälle wenigstens eine der folgenden Komponenten aufweist: feste und flüssige Biomassen oder aus ihnen hergestellte Produkte, Kunststoffe (Polymere), anorganische Materialien, wie Mineralien, Metalle und Ihren Verbindungen, feste oder flüssige Stör- und/oder Gefahrenstoffe, wie z.B. Schwermetalle und ihre Verbindungen, halogensubstituierte organische Verbindungen, wie z.B. Flammschutzmittel, zellulosehaltige Roh- und Abfallstoffe, Fettsäure, Biopolymere, Bitumenmassen, Teermassen, Kombinationen hieraus und dergleichen.

5. Verfahren gemäß Anspruch 1, **dadurch gekennzeichnet, dass** die alkalische Lösung Carbonate, insbesondere Kaliumcarbonat enthält.

6. Verfahren gemäß Anspruch 5, **dadurch gekennzeichnet, dass** die Lösung eine gesättigte Kaliumcarbonatlösung ist und/oder die Dichte der Lösung 1.5 bis 1.6 g/cm³ ist.

7. Verfahren gemäß Anspruch 6, **dadurch gekennzeichnet, dass** die organischen Hilfsmittel, Schmieröle, Motorenöle, aliphatische Kohlenwasserstoffe oder dergleichen sind.

8. Verfahren gemäß Anspruch 6 oder 7, **gekennzeichnet durch** die Trennung der wässrigen, alkalischen Phase und organischen Phase mittels Extraktion und/oder Dekantierung.

9. Verfahren gemäß einem der Ansprüche 6 bis 8, **gekennzeichnet durch** die Behandlung der wässrigen, alkalischen Phase und/oder der organischen Phase mittels Hydrierung und/oder Kolbe-Synthese.

10. Verfahren gemäß einem der Ansprüche 6 bis 9, **gekennzeichnet durch** Vakuumdestillation der organischen und/oder wässrigen Phase.

11. Verfahren nach einem der vorhergehenden Ansprüche, **dadurch gekennzeichnet, dass** im Reaktor (3) die alkalische Lösung vorgelegt wird und eine quasikontinuierliche Zuführung des Abfalls, insbesondere mittels Stopfschnecken oder Kolbenpressen, im Semi-Batch-Betrieb erfolgt.

12. Verfahren gemäß Anspruch 1, **dadurch gekennzeichnet, dass** der Reaktor (3) ein Rührkessel mit mechanischem Rührwerk (12) und/oder ein Umlaufreaktor ist.

13. Verfahren gemäß wenigstens einem der vorstehenden Ansprüche, **gekennzeichnet durch** Aufrechterhaltung des Drucks und der Temperatur über einen Zeitraum von 0.5 h bis 30 h, vorzugsweise von 2 h bis 20 h und insbesondere von mehr als 10 h.

14. Verfahren gemäß wenigstens einem der vorstehenden Ansprüche, **gekennzeichnet durch** die Zerkleinerung der aufzubereitenden Abfälle auf eine vorgegebene Partikelgröße welche insbesondere wenigstens eine Kantenlänge von 0.1 bis 10 cm beträgt.

15. Verfahren nach einem der vorhergehenden Ansprüche, **dadurch gekennzeichnet, dass** die Zuführung des Abfalls im Chargenbetrieb durch Öffnen des Reaktors (3) und Eintragung des Abfalls erfolgt und anschließend die alkalische Lösung zugesetzt wird.

16. Verfahren nach einem der vorhergehenden Ansprüche, **dadurch gekennzeichnet, dass** die Zufuhr von Wärme während des Prozesses durch mindestens einen Wärmetauscher (5) oder mit im Prozess eingesetzten Wärmeträgem, insbesondere Dampf oder Thermoöl, erfolgt.

17. Verfahren nach einem der vorhergehenden Ansprüche, **dadurch gekennzeichnet, dass** die anorganischen Bestandteile durch mindestens eine Austragsvorrichtung kontinuierlich oder chargenweise entfernt und anschließend mit aufbereiteter, alkalischer Lösung und/oder Wasser gewaschen werden.

18. Verfahren nach einem der vorhergehenden Ansprüche, **dadurch gekennzeichnet, dass** aus den anorganischen Bestandteilen Metalle mittels Elektroraffination und/oder galvanischer und/oder chemischer und/oder mechanischer Verfahren aufbereitet werden.

19. Verfahren nach einem der vorhergehenden Ansprüche, **dadurch gekennzeichnet, dass** die Rektifikationskolonne (4) eine Füllkörperkolonne ist.

20. Verfahren nach einem der vorhergehenden Ansprüche, **dadurch gekennzeichnet, dass** im Anschluss an die Rektifikationskolonne (4) mit einem Druckregler der Druck im System konstant gehalten wird.

21. Verfahren nach einem der vorhergehenden Ansprüche, **dadurch gekennzeichnet, dass** die organischen Bestandteile aus dem Schleppdampf durch Überführung in eine Kondensationsapparatur abgetrennt werden und der an organischen Bestanteilen abgereicherte Schleppdampf dem Prozess wieder zugeführt wird.

22. Verfahren nach einem der vorhergehenden Ansprüche, **dadurch gekennzeichnet, dass** eine partielle Hydrierung, insbesondere unter Verwendung von Raney-Nickel als Katalysator, zumindest eines Teils der organischen Bestandteile mit einem zu geringen Dampfdruck erfolgt, durch die Polarität dieser organischen Bestandteile erniedrigt und damit deren Dampfdruck erhöht wird.

23. Verfahren nach einem der vorhergehenden Ansprüche, **dadurch gekennzeichnet, dass** die in flüssiger Form vorliegenden organischen Bestandteile einer Hydrierung, insbesondere unter Verwendung von Raney- Nickel als Katalysator, zur Entfernung von Heteroatomen und/oder einem Hydrocracking unterzogen werden.

## Claims

1. Process for the treatment of waste in a reactor (3) comprising the following steps:
- Combining the waste to be treated and an aqueous, alkaline solution and a water-insoluble organic auxiliary to form a reaction mixture;
- Heating the reaction mixture to a temperature range between 140 °C to 250 °C and a pressure between 3 bar and 12 bar to produce at least an aqueous phase, an organic phase, a gas phase and optionally a solid phase;
- Removal of the gas phase from the reactor (3);
- Separation of the organic and aqueous components of the gas phase, in particular by a rectification column (4);
- Feeding the aqueous components of the gas phase back into the reactor (3).

2. Process according to claim 1, **characterized by** the separation of the solid phase from the reaction mixture.

3. Process according to claim 2, **characterized by** washing the solid phase after separation.

4. Process according to claim 1, **characterized in that** the waste comprises at least one of the following components: solid and liquid biomasses or products produced therefrom, plastics (polymers), inorganic materials such as minerals, metals and compounds thereof, solid or liquid pollutants and/or hazardous materials, such as heavy metals and compounds thereof, halogen-substituted organic compounds, such as flame retardants, cellulose-containing raw materials and waste, fatty acid, biopolymers, bitumen masses, tar masses, combinations thereof and the like.

5. Process according to claim 1, **characterized in that** the alkaline solution contains carbonates, particularly potassium carbonate.

6. Process according to claim 5, **characterized in that** the solution is a saturated potassium carbonate solution and/or the density of the solution is 1.5 to 1.6 g/cm³.

7. Process according to claim 6, **characterized in that** the organic auxiliaries are lubricating oils, motor oils, aliphatic hydrocarbons or the like.

8. Process according to claim 6 or 7, **characterized by** the separation of the aqueous, alkaline phase and organic phase by extraction and/or decantation.

9. Process according to any one of claims 6 to 8, **characterized by** the treatment of the aqueous alkaline phase and/or the organic phase by hydrogenation and/or Kolbe synthesis.

10. Process according to any one of claims 6 to 9, **characterized by** vacuum distillation of the organic and/or aqueous phase.

11. Process according to any one of the preceding claims, **characterized in that** the alkaline solution is provided in the reactor (3) and a quasi-continuous feeding of the waste takes place in semi-batch operation, in particular by means of compacting screws and piston presses.

12. Process according to claim 1, **characterized in that** the reactor (3) is a stirrer tank having a mechanical stirrer (12) and/or a circulation reactor.

13. Process according to any one of the preceding claims, **characterized by** maintaining the pressure and the temperature for a period from 0.5 h to 30 h, preferably from 2 h to 20 h and in particular for more than 10 h.

14. Process according to any one of the preceding claims, **characterized by** crushing the waste to be treated to a given particle size which, in particular, has at least an edge length of 0.1 to 10 cm.

15. Process according to any one of the preceding claims, **characterized in that** the feeding of the waste takes place in batch mode by opening the reactor (3) and inputting the waste, and subsequently adding the alkaline solution.

16. Process according to any one of the preceding claims, **characterized in that** the supply of heat during the process takes place by at least one heat exchanger (5) or by a heat transfer medium used in the process, particularly steam or thermal oil.

17. Process according to any one of the preceding claims, **characterized in that** the inorganic components are removed continuously or batchwise by at least one discharge device and are washed subsequently by processed, alkaline solution and/or water.

18. Process according to any one of the preceding claims, **characterized in that** metals are recovered from the inorganic components by means of electric refining and/or galvanic and/or chemical and/or mechanical processes.

19. Process according to any one of the preceding claims, **characterized in that** the rectification column (4) is a packed column.

20. Process according to any one of the preceding claims, **characterized in that** the pressure in the system after the rectification column (4) is held constant using a pressure regulator.

21. Process according to any one of the preceding claims, **characterized in that** the organic components are separated from the dragging steam through transfer into a condensing apparatus, and the dragging steam depleted of organic constituents is fed back into the process.

22. Process according to any one of the preceding claims, **characterized in that** a partial hydrogenation, in particular using Raney nickel as catalyst, of at least a portion of the organic components occurs at too low vapor pressure, is lowered by the polarity of said organic components and thus increases the vapor pressure thereof.

23. Process according to any one of the preceding claims, **characterized in that** the organic components present in liquid form are subjected to hydrogenation, in particular using Raney nickel as catalyst, for the removal of heteroatoms and/or are subjected to hydrocracking.

## Revendications

1. Procédé destiné au traitement de déchets dans un réacteur (3), comprenant les étapes :
- regroupement des déchets à traiter en un mélange réactionnel à l'aide d'une solution aqueuse alcaline et d'un agent auxiliaire organique non soluble dans l'eau ;
- échauffement du mélange réactionnel à une plage de température allant de 140° C jusqu'à 250° C et une pression comprise entre 3 bars et 12 bars pour générer au moins une phase aqueuse, une phase organique, une phase gazeuse et le cas échéant une phase solide ;
- évacuation de la phase gazeuse hors du réacteur (3) ;
- séparation des composants organiques et aqueux de la phase gazeuse, notamment au moyen d'une colonne de rectification (4) ;
- recyclage dans le réacteur (3) des composants aqueux de la phase gazeuse.

2. Procédé selon la revendication 1, **caractérisé par** la séparation de la phase solide du mélange réactionnel.

3. Procédé selon la revendication 2, **caractérisé par** le lavage de la phase solide après la séparation.

4. Procédé selon la revendication 1, **caractérisé en ce que** les déchets présentent au moins un des composants suivants : biomasses solides et liquides ou produits fabriqués à partir de ces biomasses, matières synthétiques (polymères), matières anorganiques, telles que minéraux, métaux et leurs alliages, impuretés et/ou matières dangereuses solides ou liquides, comme par ex. les métaux lourds et leurs alliages, liaisons organiques substituées par halogènes, comme par ex. les agents ignifuges, les matières premières et les déchets contenant de la cellulose, les acides gras, les biopolymères, les masses bitumineuses, les masses goudronneuses, les combinaisons de ces masses et similaires.

5. Procédé selon la revendication 1, **caractérisé en ce que** la solution alcaline contient des carbonates, notamment du carbonate de potassium.

6. Procédé selon la revendication 5, **caractérisé en ce que** la solution est une solution de carbonate de potassium saturée et/ou **en ce que** la densité de la solution est de 1,5 à 1,6 g/cm³.

7. Procédé selon la revendication 6, **caractérisé en ce que** les agents auxiliaires organiques sont des huiles lubrifiantes, des huiles pour moteur, des hydrocarbures aliphatiques ou similaires.

8. Procédé selon la revendication 6 ou 7, **caractérisé par** la séparation de la phase aqueuse alcaline et de la phase organique au moyen d'extraction et/ou de décantation.

9. Procédé selon l'une quelconque des revendications 6 à 8, **caractérisé par** le traitement de la phase aqueuse alcaline et/ou de la phase organique au moyen d'hydrogénation et/ou de synthèse de Kolbe.

10. Procédé selon l'une quelconque des revendications 6 à 9, **caractérisé par** distillation sous vide de la phase organique et/ou de la phase aqueuse.

11. Procédé selon l'une quelconque des revendications précédentes, **caractérisé en ce que** la solution alcaline est déposée dans le réacteur (3) et **en ce qu'**une alimentation quasi continue des déchets, notamment au moyen de vis sans fin de bourrage ou de presses à piston, est réalisée en mode semi-continu.

12. Procédé selon la revendication 1, **caractérisé en ce que** le réacteur (3) est une cuve malaxeuse munie d'un mélangeur mécanique (12) et/ou un réacteur à recirculation.

13. Procédé selon au moins l'une quelconque des revendications précédentes, **caractérisé par** le maintien de la pression et de la température pendant une période de temps de 0,5 h à 30 h, de préférence de 2 h à 20 h et notamment de plus de 10 h.

14. Procédé selon au moins l'une quelconque des revendications précédentes, **caractérisé par** le broyage des déchets à traiter à une grosseur de particules prédéfinie, laquelle est notamment au moins une longueur d'arête de 0,1 à 10 cm.

15. Procédé selon l'une quelconque des revendications précédentes, **caractérisé en ce que** l'alimentation des déchets en mode de charge est réalisée par l'ouverture du réacteur (3) et l'apport des déchets et **en ce que** la solution alcaline est ensuite ajoutée.

16. Procédé selon l'une quelconque des revendications précédentes, **caractérisé en ce que** l'amenée de chaleur pendant le processus est réalisée au moyen d'au moins un échangeur de chaleur (5) ou à l'aide de caloporteurs utilisés pendant le processus, notamment à l'aide de vapeur ou d'huile thermique.

17. Procédé selon l'une quelconque des revendications précédentes, **caractérisé en ce que** les composants anorganiques sont retirés en continu ou par lots au moyen d'au moins un dispositif de décharge et sont ensuite lavés avec la solution alcaline traitée et/ou de l'eau.

18. Procédé selon l'une quelconque des revendications précédentes, **caractérisé en ce qu'**à partir des composants anorganiques, les métaux sont traités au moyen d'électroraffinage et/ou de procédés galvaniques et/ou chimiques et/ou mécaniques.

19. Procédé selon l'une quelconque des revendications précédentes, **caractérisé en ce que** la colonne de rectification (4) est une colonne à corps de remplissage.

20. Procédé selon l'une quelconque des revendications précédentes, **caractérisé en ce que** suite à la colonne de rectification (4), la pression est maintenue constante dans le système au moyen d'un pressostat.

21. Procédé selon l'une quelconque des revendications précédentes, **caractérisé en ce que** les composants organiques provenant de la vapeur entraînée sont séparés en étant transférés dans un appareil de condensation et **en ce que** la vapeur entraînée appauvrie en composants organiques est de nouveau amenée au processus.

22. Procédé selon l'une quelconque des revendications précédentes, **caractérisé en ce qu'**une hydrogénation partielle, notamment avec utilisation de nickel de Raney en tant que catalyseur, au moins d'une partie des composants anorganiques est réalisée avec une pression de vapeur trop faible, **en ce qu'**elle est diminuée en raison de la polarité de ces composants organiques et **en ce qu'**elle augmente donc la pression de vapeur de ceux-ci.

23. Procédé selon l'une quelconque des revendications précédentes, **caractérisé en ce que** les composants organiques présents sous forme liquide sont soumis à une hydrogénation, notamment avec utilisation de nickel de Raney en tant que catalyseur, pour retirer les hétéroatomes et/ou un hydrocracking.
